# DEMANDE DE BREVET EUROPEEN

(11) **EP 1 056 298 A1**
(43) Date de publication de la demande: **29.11.2000**
(21) Numéro de dépôt: 00401461.9
(22) Date de dépôt: 25.05.2000
(51) Int. Cl.: H04Q 3/00

(54) **Point de signalisation de réseau sémaphore**

(30) Priorité: 26.05.1999 FR 9906631
(71) Demandeur: FRANCE TELECOM, 75015 Paris (FR)
(72) Inventeur: Bedouani, Mohamed, 78220 Viroflay (FR); Salle, Jacques, 78690 Les Essarts le Roi (FR); Storck, Alain, 78280 Guyancourt (FR)
(74) Mandataire: Texier, Christian

(57) **Abrégé**

L'invention concerne un serveur de télécommunications comprenant au moins deux machines (100,200) comprenant chacune une série de contrôleurs (D1,...,Dn, E1,...,En) traitant chacun des liaisons d'échange avec le réseau, caractérisé en ce qu'il comprend des moyens pour surveiller le bon fonctionnement des contrôleurs (D1,...,Dn, E1,...,En) et pour commander, lorsqu'un contrôleur (D1,...,Dn, E1,...,En) d'une machine (100,200) est déficient, une prise en charge des liaisons d'échange de co contrôleur (D1,...,Dn, E1,...,En) par un contrôleur dual (D1,...,Dn, E1,...,En) de l'autre machine (100,200).

## Description

L'invention concerne les réseaux de télécommunications et plus particulièrement les plate-formes qui réalisent le traitement des données dans ces réseaux.

On souhaite munir les réseaux actuels de plate formes de traitement qui soient robustes aux pannes, et notamment aux pannes de matériel. Pour cela on a proposé, notamment dans le cas des réseaux des opérateurs, de doubler certaines machines et de faire travailler chacune des deux machines à la moitié de sa capacité.

Dans une telle architecture, lorsqu'une première machine tombe en panne, la deuxième prend en charge le traitement effectué auparavant pour cette première machine, de sorte que l'on assure la continuité de service.

Cependant de telles architectures sont lourdes et induisent, lorsqu'une machine est mise hors service, une très grande diminution de la vitesse de traitement de l'ensemble. Une telle diminution de vitesse est typiquement d'un facteur 2 dans le cas d'un ensemble de traitement à deux machines.

L'invention se propose de remédier à ces inconvénients.

Pour cela, l'invention propose un serveur de télécommunications comprenant au moins deux machines comprenant chacune une série de contrôleurs traitant chacun des liaisons d'échange avec le réseau, caractérisé en ce qu'il comprend des moyens pour surveiller le bon fonctionnement des contrôleurs et pour commander, lorsqu'un contrôleur d'une machine est déficient, une prise en charge des liaisons d'échange de ce contrôleur par un contrôleur dual de l'autre machine.

D'autres caractéristiques, buts et avantages de l'invention apparaîtront à la lecture de la description détaillée qui suit, faite en référence aux dessins annexés sur lesquels :
- la figure 1 est un schéma fonctionnel représentant un serveur à continuité de service selon l'invention ;
- la figure 2 est un schéma représentant des chemins de messages, données statiques et dynamiques dans un serveur selon l'invention;
- la figure 3 est un schéma fonctionnel d'un serveur selon l'invention sur lequel on a mis en évidence les liens entre des contrôleurs d'une machine et un systéme d'exploitation de l'autre machine;
- la figure 4 est un schéma représentant le même serveur, sur lequel on a représenté les liens mis en place dans le cas d'une défaillance d'un des contrôleurs.
- la figure 5 est un schéma du même serveur sur lequel on a représenté les liens mis en place dans le cas de la défaillance d'une des deux machines;
- la figure 6 est un schéma fonctionnel représentatif de l'architecture d'un contrôleur selon l'invention;
- la figure 7 est un schéma fonctionnel représentatif de l'implémentation logicielle d'un ensemble machine/contrôleur selon l'invention;
- la figure 8 est un schéma fonctionnel représentatif de la partie de traitement d'un contrôleur selon l'invention;
- la figure 9 représente un circuit réalisant des fonctions de compteur et de décodage au sein d'une interface d'un contrôleur selon l'invention;
- la figure 10 représente un circuit réalisant une désérialisation/mémorisation dans un contrôleur selon l'invention;
- la figure 11 représente un circuit réalisant une mémorisation/sérialisation dans un contrôleur selon l'invention;
- la figure 12 illustre un enchaînement d'opérations de lecture/écriture dans une mémoire à double accés d'un contrôleur selon l'invention;
- la figure 13 représente un registre d'adresse d'un contrôleur selon l'invention;
- la figure 14 représente un registre de données d'un contrôleur selon l'invention;
- la figure 15 représente un enchaînement de données synchronisées par une horloge;
- les figures 16 et 17 représentent un procédé de transmission de données mis en oeuvre dans le dispositif selon l'invention;
- la figure 18 représente un assemblage contrôleurs / boîtier externe selon l'invention ;
- la figure 19 représente un assemblage contrôleurs / boîtier externe selon une autre variante de l'invention;
- la figure 20 représente un montage de contrôleurs/boîtier externe selon encore une variante de l'invention;
- la figure 21 représente un montage d'horloge au sein d'un ensemble de deux contrôleurs conforme à la figure 20;
- la figure 22 représente un montage de transmission de données entre deux contrôleurs montés ensemble conformément à la figure 20;
- la figure 23 représente un montage de transmission de RESET dans ce même ensemble.

L'architecture proposée ici permet l'obtention d'une plate-forme à continuité de service avec distribution des liens sur les deux machines. Dans le cas d'une application à un réseau sémaphore, ce serveur forme un point de signalisation de type 〈〈 point sémaphore〉〉.

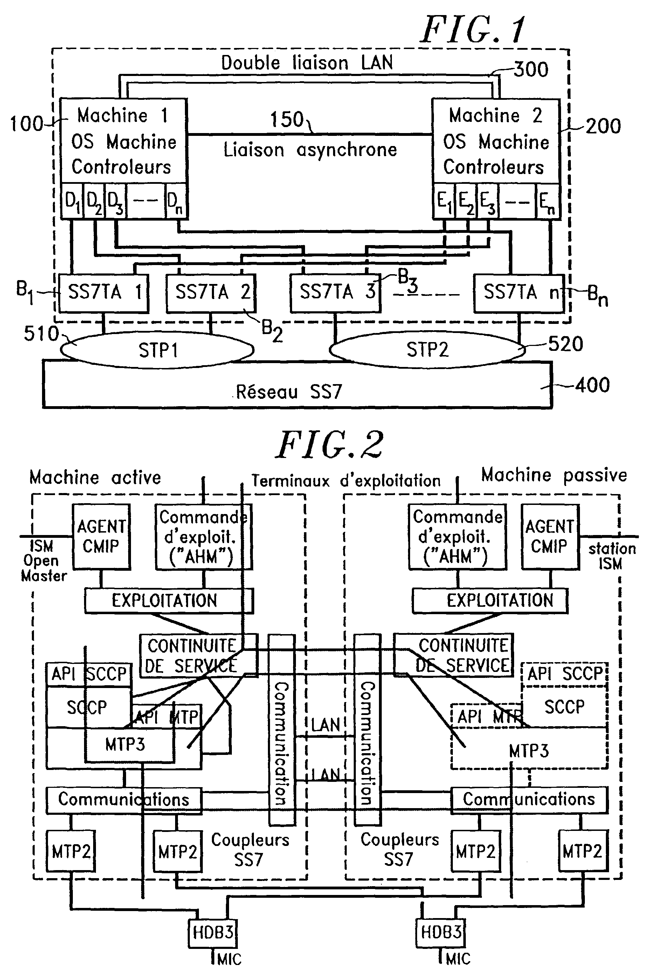

Telle que représentée à la figure 1, la plate-forme selon l'invention comporte deux machines 100 et 200 reliées entre elles par une double liaison LAN 300 (de type FDDI, Ethernet...), et reliées à un réseau 400 via des commutateurs 510 et 520 de type STP, par des boîtiers d'interface référencés B1, B2, ...,Bn.

Chaque machine 100, 200 comporte une série de n contrôleurs. Chaque contrôleur consiste en une unité de traitement de niveau 1 et 2, en référence au protocole de communication usité, et plus précisément ici en référence au protocole SS7.

Les n contrôleurs de la machine 100 sont référencés D1, D2, ..., Dn et ceux de la machine 200 sont référencés E1, E2, ..., En.

Chaque boîtier B1, B2,...,Bn est relié à deux contrôleurs disposés chacun dans une machine différente. Ainsi, chaque boîtier B1 à Bn présente des liens de signalisation avec deux contrôleurs des deux machines. Les liens de signalisation sont donc distribués entre les contrôleurs des deux machines 100 et 200.

Le nombre n de contrôleurs par machine dépend de la capacité des machines en terme de nombre d'emplacements (slots) disponibles.

Une machine, ici la machine 100, est appelée machine active et l'autre machine passive. La machine est dite active lorsque la partie se déroulant dans le contrôleur et la partie se déroulant sous le système d'exploitation (OS) de la machine (niveaux 3 et supérieurs du protocole de communication, par exemple ici du protocole SS7) sont opérationnelles. L 'ensemble de ces deux parties est appelé bloc SS7 ou stack SS7. On dit que la machine active gère le protocole SS7.

De plus, la machine active:
- contrôle l'état de tous les contrôleurs où la couche niveau 2 (MTP2) réside;
- met à jour les données statiques et dynamiques des deux machines (à travers la double liaison LAN 300);
- scrute l'état de ses propres conditions et l'état de la machine passive.

Une machine est dite passive lorsque la partie se déroulant dans ses contrôleurs (niveau 1-2 du stack SS7) est opérationnelle et la partie se déroulant sous le système d'exploitation de la machine (OS) (niveaux 3, 4, 5... du stack SS7) est présente mais non opérationnelle.

La machine passive:
- transmet les messages reçus à travers ses propres contrôleurs vers le niveau 3 de la machine active via la double liaison LAN 300;
- scrute les états de ses propres contrôleurs et l'état de la machine active ;
- contrôle le basculement de machine de l'état passif vers l'état actif.

Le trafic émis (reçu) vers (du) réseau 400 est réparti sur l'ensemble des contrôleurs des deux machines 100 et 200.

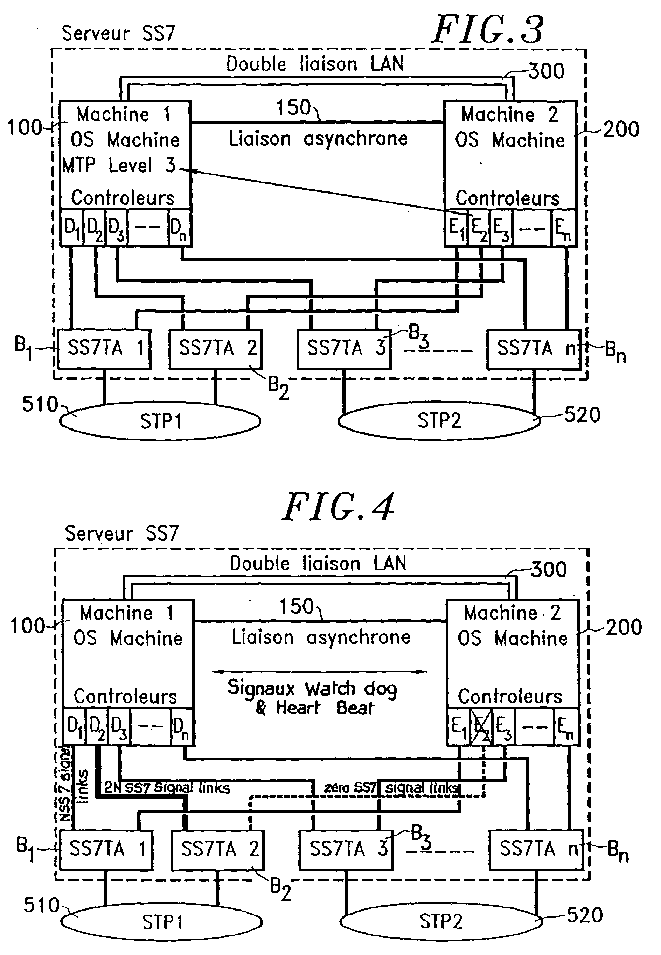

Les messages niveau 2 (MTP2) traités dans la machine passive, ici la machine 200, sont transmis à la machine active 100 à travers la double liaison LAN 300 pour être traités par les niveaux 3 et supérieurs dans la machine active, comme on peut le voir à la figure 3.

La plate-forme utilise un mécanisme de connexion permettant la continuité de service :
- tous les contrôleurs de communication SS7 sont actifs dans les deux machines ;
- les contrôleurs sont couplés par deux (un dans chaque machine) et partagent le traitement de la signalisation.

Chaque couple de contrôleurs SS7, ayant le même indice sur la figure 1 partage le même boîtier externe de même indice, assurant ainsi l'interface au réseau.

En utilisation normale, chaque contrôleur de communication traite des liens de signalisation différents.

Cependant, chaque contrôleur est utilisé pour traiter la moitié de sa capacité en termes de nombre de liens, et l'autre moitié est réservée à la duplication des liens de son contrôleur dual se trouvant dans l'autre machine.

Plus précisément, le contrôleur ayant une capacité de traitement de 2N canaux (liens) de signalisation, chaque contrôleur Dp ne traite que N canaux, et son dual Ep traitera les N autres.

Ainsi, dans le cas d'une panne d'un (des) contrôleur(s) ou de la panne d'une des deux machines 100 ou 200, le dual du contrôleur hors service peut traiter les liens traités auparavant par le contrôleur en panne. Un ensemble de trames de signalisation est dirigé vers le contrôleur de l'autre machine en quelques secondes à partir de l'apparition de la panne. Celle disposition permet de laisser à la machine ayant un contrôleur déficient la charge du traitement des données arrivant sur ses autres contrôleurs, de sorte que le traitement reste globalement réparti sur les deux machines.

Les contrôleurs d'interface sont typiquement des contrôleurs à insérer dans la machine et les boîtiers externes sont autoalimentés.

Un ensemble de mécanismes offre la continuité de service (point de vue niveau 3) comme illustré à la figure 2, qui montre notamment les chemins des messages, ainsi que les emplacements des données statiques et dynamiques.

Les deux machines 100 et 200 sont en outre reliées par une liaison asynchrone 150.

La liaison asynchrone 150 renforce le mécanisme de la continuité de service. Elle sert à donner périodiquement à la machine passive l'état de la machine active et vice-versa.

En effet, sans cette liaison asynchrone 150 et en cas d'une panne de la double liaison LAN 300, la machine passive (ou en stand-by) risque de démarrer alors que l'autre machine 100 est réellement active. Les deux machines risqueraient donc de devenir actives en même temps.

Comme illustré par la figure 3, la surveillance des pannes matérielles et software est gérée par le niveau 3 sous le systéme d'exploitation de la machine active 100. Les pannes matérielles concernent essentiellement les contrôleurs et les machines. Une surveillance mutuelle des deux machines 100 et 200 à travers la double liaison LAN 300 détecte l'éventuelle non disponibilité d'une des machine. Une surveillance de tous les contrôleurs détecte l'éventuelle non-disponibilité d'un contrôleur.

Le fait que les deux machines 100, 200 soient reliées par une double liaison LAN 300 permet de limiter les collisions, une liaison étant utilisée pour l'émission et l'autre pour la réception. Une surveillance mutuelle de ces deux liaisons permet de basculer le trafic sur une seule liaison en bidirectionnel en cas de panne d'une des deux liaisons.

Une éventuelle panne d'un boîtier externe B1,...Bn est indiquée par des remontées d'alarmes qui rendent les liens de signalisation concernés hors service.

L'accés du serveur est réalisé par deux organes principaux:
- chaque contrôleur D1,...,Dn,E1,...En inséré dans une machine 100, 200, et chaque boîtier externe B1,...Bn.

Le principal rôle du boîtier externe est de dupliquer des intervalles de temps (ITS) reçus et de les rediriger vers les deux machines 100 et 200 : ce mécanisme constitue un moyen de sécurisation fin, notamment au niveau des connecteurs des contrôleurs.

Le fonctionnement du dispositif, dans le cas d'une panne d'un contrôleur, est le suivant. On suppose ici que le contrôleur E2 de la machine 200 est en panne. Cette panne est détectée après quelques secondes, et les intervalles de temps sont basculés sur le contrôleur dual D2 se trouvant dans la machine 100, comme illustré par la figure 4.

Chaque contrôleur réserve ainsi N canaux pour la duplication des N canaux traités par le contrôleur dual. Ainsi, lorsqu'un contrôleur est en panne, le trafic est basculé (les N canaux sont basculés) vers l'autre contrôleur qui traitera ainsi les 2xN canaux. Seuls les messages transitant au moment de la panne du contrôleur seront perdus.

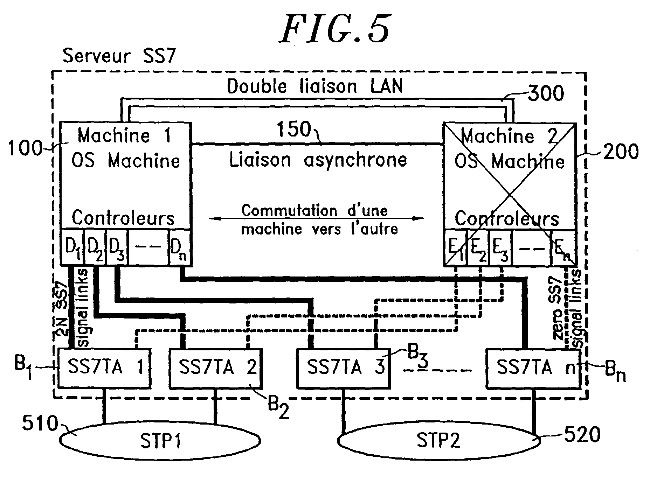

Dans le cas d'une panne d'une des deux machines 100, 200, le fonctionnement du dispositif est le suivant: si une panne de la machine active est détectée, la machine passive devient active et seulement dans ce cas. Par exemple, lorsque la machine 100 ne reçoit plus de signaux 〈〈heartbeat messages〉〉 de la part de l'autre machine 200, alors il y aura basculement de tous les canaux (liens de la machine 200) vers la machine 100. Ainsi, tous les liens de signalisation sont traités par la machine 100, comme illustré à la figure 5.

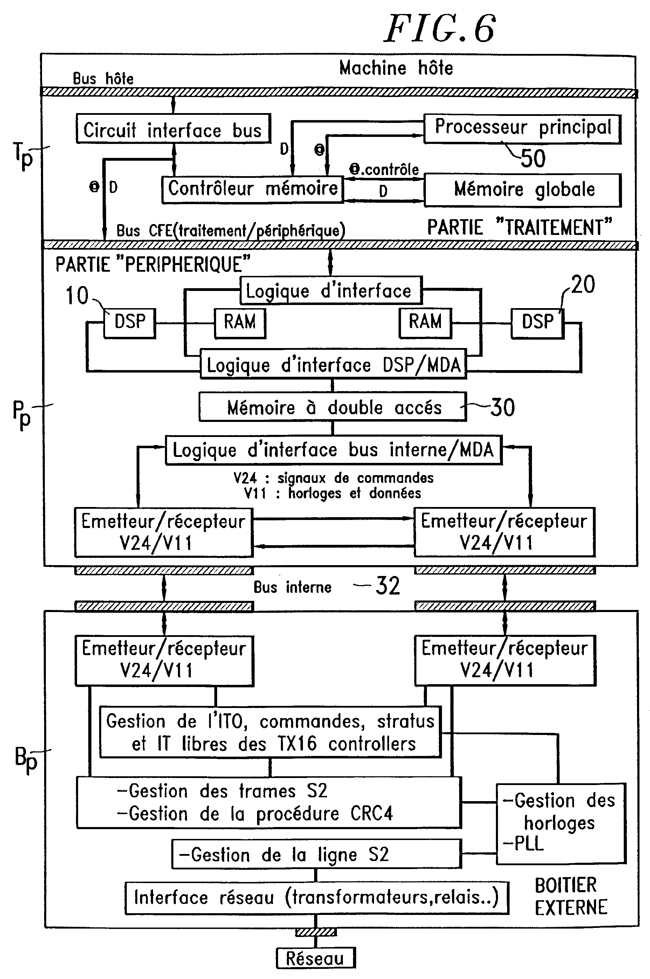

L'architecture matérielle de l'ensemble contrôleur/boîtier externe est montrée par la figure 6. Le contrôleur d'indice p comporte deux parties: la partie 〈〈traitement〉〉 Tp et la partie 〈〈 périphérique〉〉 Pp.

La partie 〈〈 périphérique〉〉 est construite autour au moins de deux processeurs de traitement de signaux 10 et 20 (Digital Signal Processor en anglais, ou DSP). Chaque DSP 10, 20 est indépendant et possède sa propre mémoire RAM (64K et non limité). Chaque processeur est connecté à travers une 〈〈 Glue Logic〉〉 à un bus 〈〈 host〉〉 et à une mémoire double accès 30 du contrôleur pour l'émission/réception sur un bus INTERNE 32 vers le boîtier externe Bp.

La partie 〈〈 périphérique〉〉 Pp est vue de la partie de traitement Tp comme un maître possible du bus d'entrée/sortie d'un procosseur principal 50 de la partie 〈〈 traitement〉〉 Tp du contrôleur. La mémoire de la partie périphérique Pp appartient à l'espace mémoire du processeur principal 50, ce qui permet le chargement d'un micro logiciel dans les processeurs de traitement de signaux 10 et 20.

Les transferts sur le bus host (entre la partie de traitement Tp et la partie périphérique Pp) on lieu en mode maître. Le bus interne est de type multiplexé, haute vitesse et multi-maître.

Le boîtier externe Bp assure la connexion au réseau, et la gestion des trames émises/reçues vers/du réseau (ici, des trames de type S2).

Il est connecté par câble aux contrôleurs Dp et Ep par l'intermédiaire de deux connecteurs fonctionnellement identiques. Le bus interne est un bus série à 2 Mbps qui transporte des intervalles de temps IT1 à IT31 d'accès primaire et un ITO qui véhicule commandes et status.

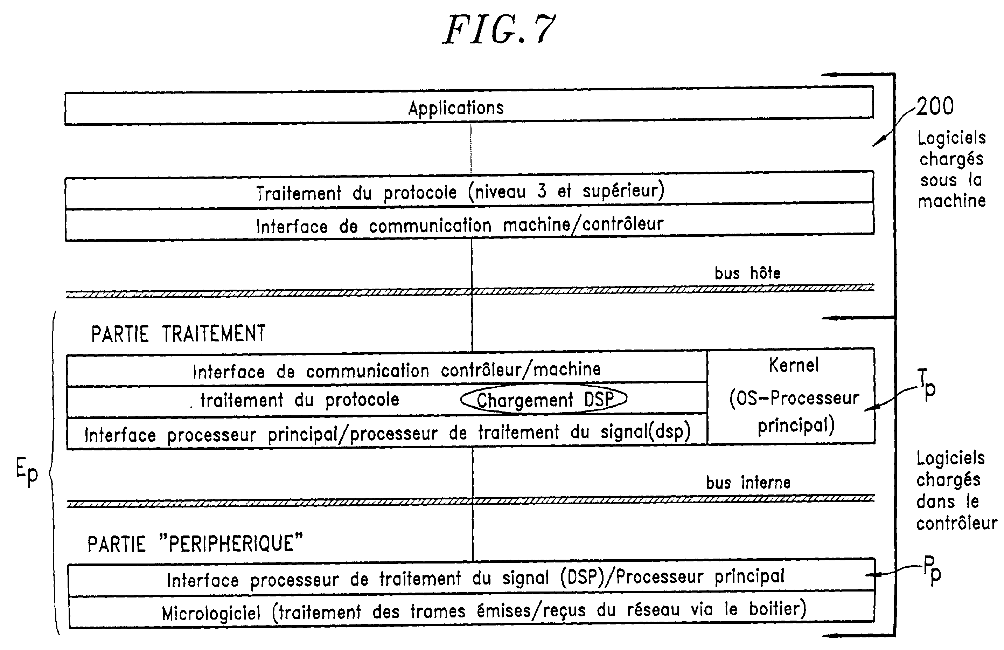

L'architecture logicielle du serveur SS7 est montrée sur la figure 7. Nous distinguons les logiciels chargés sous le système d'exploitation de la machine et les logiciels chargés dans le contrôleur.

Trois logiciels coexistent dans le contrôleur SS7 :
- logiciel de communication entre le système (machine) et le contrôleur ;
- logiciel traitant le niveau 2 du protocole SS7 (par le processeur principal) ;
- logiciel niveau 1 dont une partie est traitée par le processeur principal (interface processeur principal/DSP, module de chargement des logiciels DSP, contrôle de l'interface série....) et l'autre partie par les DSP (traitement des trames HDLC,...)

Ces logiciels sont chargés dans le contrôleur à la mise sous tension/initialisation du contrôleur.

Le boîtier externe Bp assure l'interface physique avec le réseau.

Le contrôleur comporte ici une circuiterie permettant de séparer les fonctions de traitement et émission/réception d'un point d'accès télécom.

L'objectif de cette circuiterie est de désynchroniser les points d'accès d'une ligne de télécommunication (émission/réception) du traitement connu sous le nom de HDLC (High Level Data Link Control) proprement dit des données, effectué par les processeurs de traitement 10 et 20.

Le traitement du protocole de communication est effectué par le micrologiciel embarqué dans le DSP 10 ou 20: le DSP joue le rôle d'un contrôleur de communication.

Les contrôleurs proposés ici comportent chacun deux processeurs de traitement de signaux 10 et 20 indépendants dédiés aux traitements du protocole télécom en utilisant strictement le même micrologiciel sur les deux DSP 10 et 20, mais de façon indépendante : la capacité de traitement en termes de nombre de canaux est ainsi doublée.

Chaque processeur 10, 20 n'a, à aucun moment, besoin des résultats du traitement effectué par l'autre processeur, pour effectuer son traitement propre.

La séparation (asynchronisme entre le réseau et le contrôleur SS7) est obtenue par l'utilisation d'une Mémoire à Double Accès 30 (MDA) permettant aux données reçues sous forme de trame d'être rangées en file d'attente. En effet, chaque processeur 10, 20 écrit/lit les données à transmettre/reçues du bus interne dans la mémoire double port 30.

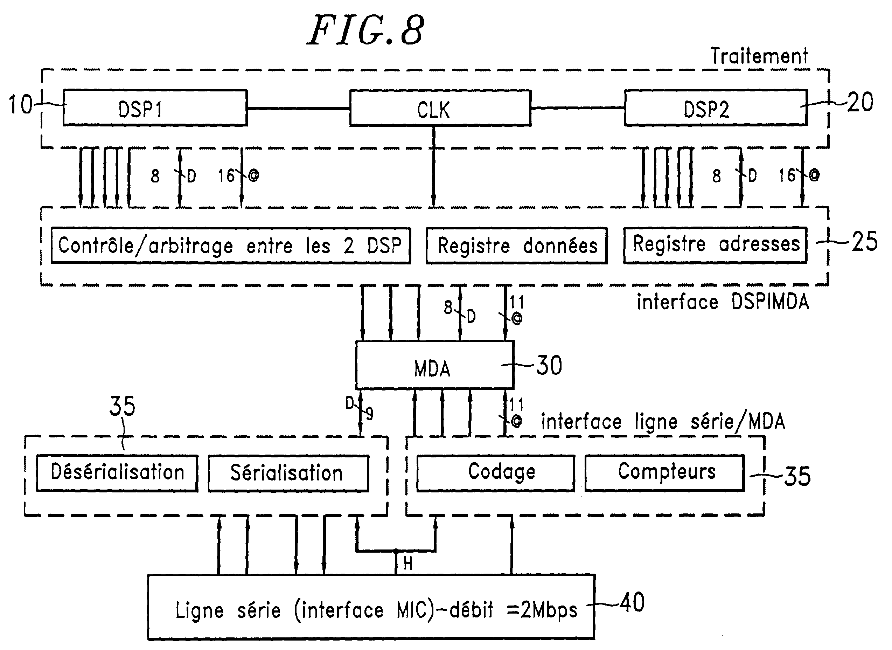

La figure 8 montre un schéma synoptique de montage de la circuiterie permettant de séparer les fonctions de traitement et d'émission/réception d'un point d'accès télécom.

Trois sous-ensembles assurent l'interface entre les processeurs 10 et 20 et un module d'interface interne 40 (la ligne série qui symbolise le point d'accès extérieur). Ces sous-ensembles comprennent la MDA 30 organisée en FIFO, une interface 25 assurant la synchronisation entre les DSP 10, 20 et la mémoire double accès 30, et enfin une interface 35 assurant la synchronisation entre l'interface interne 40 et la MDA 30, pour la génération d'adresse et sérialisation/désérialisation des données.

La mémoire double accès 30 est utilisée comme tampon entre la ligne série 40 et les processeurs de traitement 10 et 20. Elle permet de supporter un asynchronisme entre le débit du bus de la ligne série 40 (rythme du bus interne) et le traitement des DSP 10 et 20.

Dans chacun des deux sens de transmission (émission et réception), les informations sont groupées en trames de 256 bits. Les trames émises ou reçues sont constituées par 32 intervalles de temps (IT), numérotés de 0 à 31. Chaque IT est composée de 8 bits. Le rythme bit nominal est de 2.048 Mbits/s. Un numéro (modulo 16) est affecté à chaque trame émise ou reçue (utilisation d'un compteur à 4 bits). Par ailleurs, une multitrame est constituée par 16 trames pour lesquelles un numéro est affecté à chacune d'elles (modulo 16).

Les données émises et reçues sur la ligne série 40 sont lues et écrites dans la mémoire double accès 30 à une adresse calculée en fonction du numéro de trame et du numéro de I'IT de la ligne série 40.

Un compteur sur 4 bits incrémenté à chaque nouvelle trame MIC permet de considérer chaque zone de la mémoire double accès 30 comme un tampon circulaire de 16 octets.

Chaque processeur 10, 20 se synchronise sur le rythme du bus interne 40 en lisant le contenu du compteur de numéro de trame, qu'il compare à la valeur précédemment mémorisée.

Dans notre cas, la MDA 30 a une capacité de 2Kx8 bits organisée en 128 FIFO de 16 octets (64 FIFO de 16 octets par MIC). Chaque FIFO correspond à un intervalle de temps IT.

Le DSP considéré 10 ou 20 lit les octets reçus dans des zones réception et écrit les octets à émettre dans des zones émission de la MDA 30. L'interface 35 entre la ligne série 40 et la MDA 30 assure l'écriture des octets reçus dans les zones de réception et la lecture des octets à émettre dans les zones d'émission. Cette organisation permet ainsi un traitement asynchrone des données par les DSP 10, 20 et par le bus série 40.

Afin d'éviter les collisions, l'accès simultané à la même adresse sur les deux ports de la mémoire double accès 30 est impossible. De plus, afin de permettre la synchronisation avec le rythme des connecteurs des contrôleurs (Débit de 2 Mbps), les DSP 10, 20 peuvent lire, à l'aide d'un pointeur, le numéro de la trame et de la multitrame qu'ils reçoivént.

Si les DSP 10 et 20 ne lisent pas le pointeur pendant une durée de 16 trames, un signal connu sous le nom de 〈〈 watch dog〉〉 est déclenché par le processeur principal, provoquant un arrêt matériel: lorsqu'un tel événement arrive, il faut redémarrer le contrôleur.

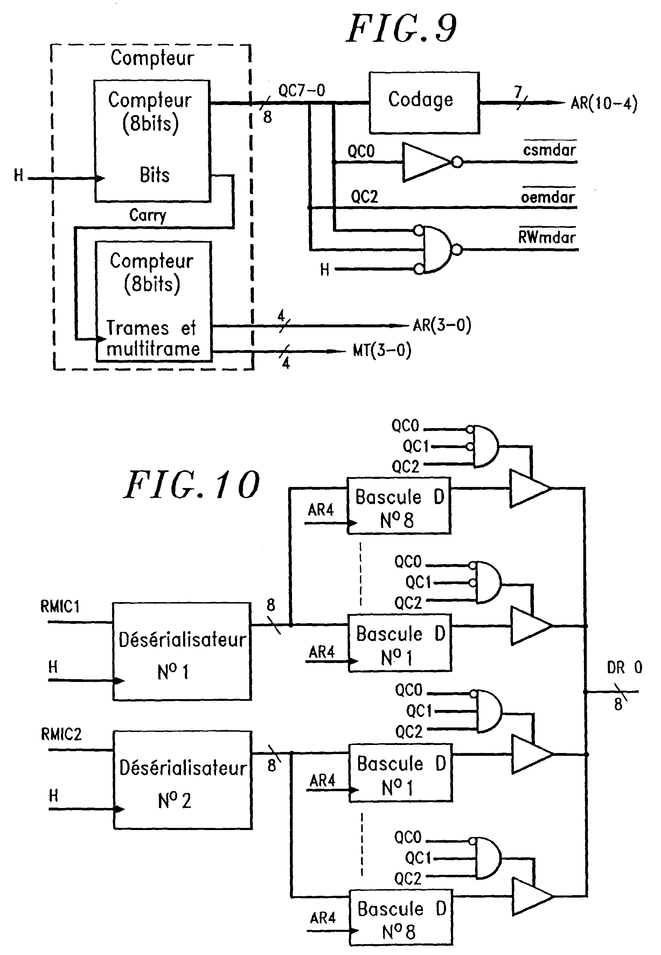

La figure 9 montre le circuit réalisant les fonctions de compteur et décodage au sein de l'interface 35.

Sur ce circuit :
L'espace d'adressage de la MDA étant de 2K octets, 11 bits d'adresse (ARO à AR10) sont nécessaires. Dans le cas où l'on considère un seul MIC, 10 bits d'adresse suffisent.

Deux compteurs 8 bits, chaînés, évoluent au rythme de l'horloge MIC. Le premier (QC0 à QC7) permet de repérer les intervalles de temps dans la trame et le second compte les trames (AR0 à AR 3), et les multitrames (MT0 à MT3). Les compteurs changent d'état sur le front négatif de l'horloge MIC.

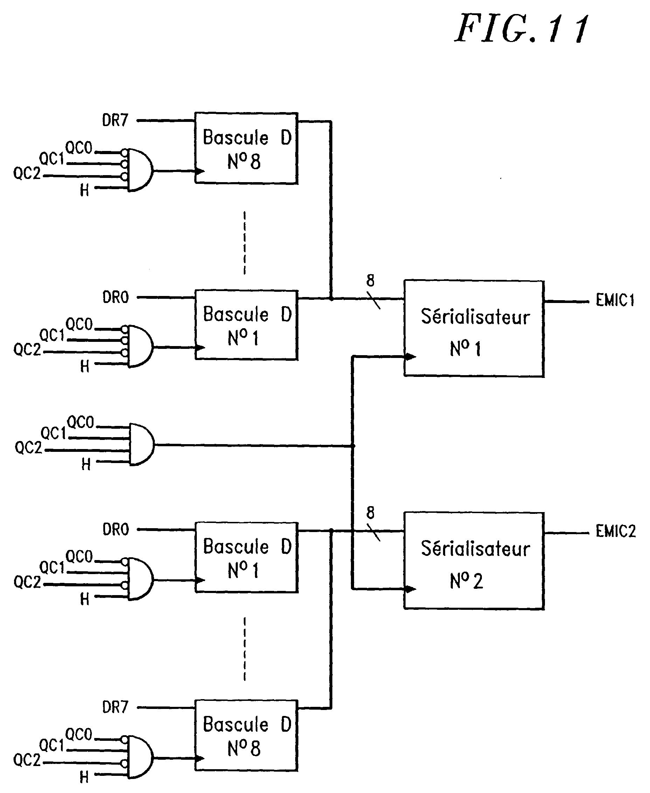

Les circuits réalisant les fonctions de mémorisation/sérialisation et désérialisation/mémorisation sont montrés par les figures 10 et 11. Dans notre cas, les fonctions de sérialisation et déserialisation sont effectuées par des sérialisateurs et désérialisateurs à base d'une bascule D, mais peuvent être réalisées autrement.

Les fonctions de sérialisation (émission vers le bus interne) ou de désérialisation (réception en provenance du bus interne) sont exécutées en permanence pour tous les intervalles de temps.

Pour la sérialisation, l'octet lu dans la mémoire double accès 30 (MDA) est mémorisé dans un registre, puis chargé dans un registre à décalages parallèle-série dont la sortie fournit le signal EMIC1 ou EMIC2 (Fig. 11).

Pour la désérialisation, l'octet reçu sur RMIC1 ou RMIC2 est chargé dans un registre série-parallèle puis mémorisé dans un second registre avant d'être écrit dans la MDA 30 (Fig. 10).

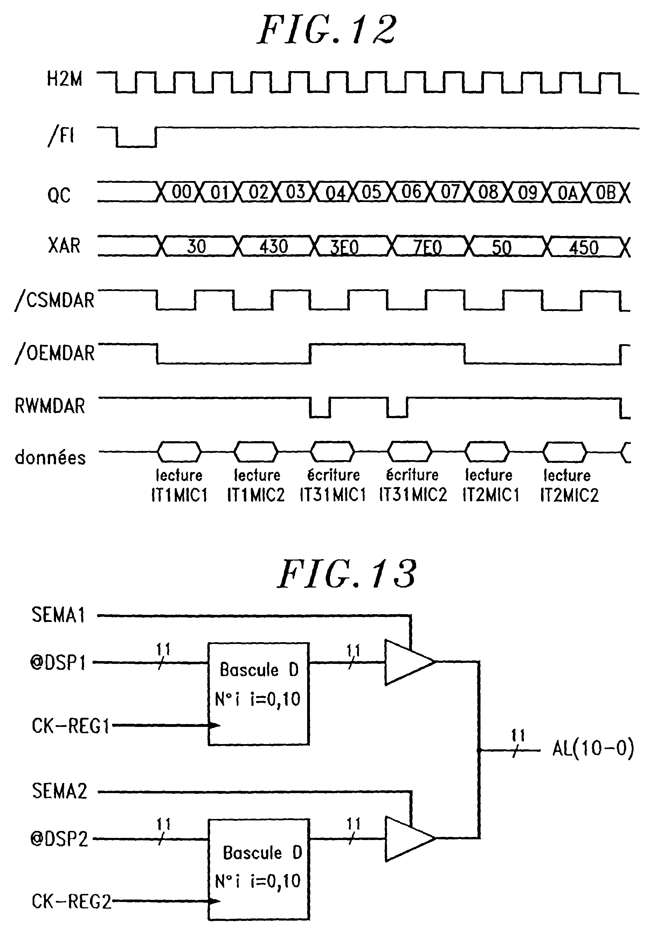

Un timing représenté sur la figure 12 montre comment s'effectuent les opérations d'écriture et de lecture dans la MDA 30.

En ce qui concerne t'interface 25 entre les DSP 10, 20 et la MDA 30, le bloc contrôle/arbitrage gère l'accès des deux processeurs 10, 20 à la MDA 30. Lorsqu'un DSP 10, 20 fait un accès, il est bloqué jusqu'à réception d'un acquittement en provenance de l'arbitre.

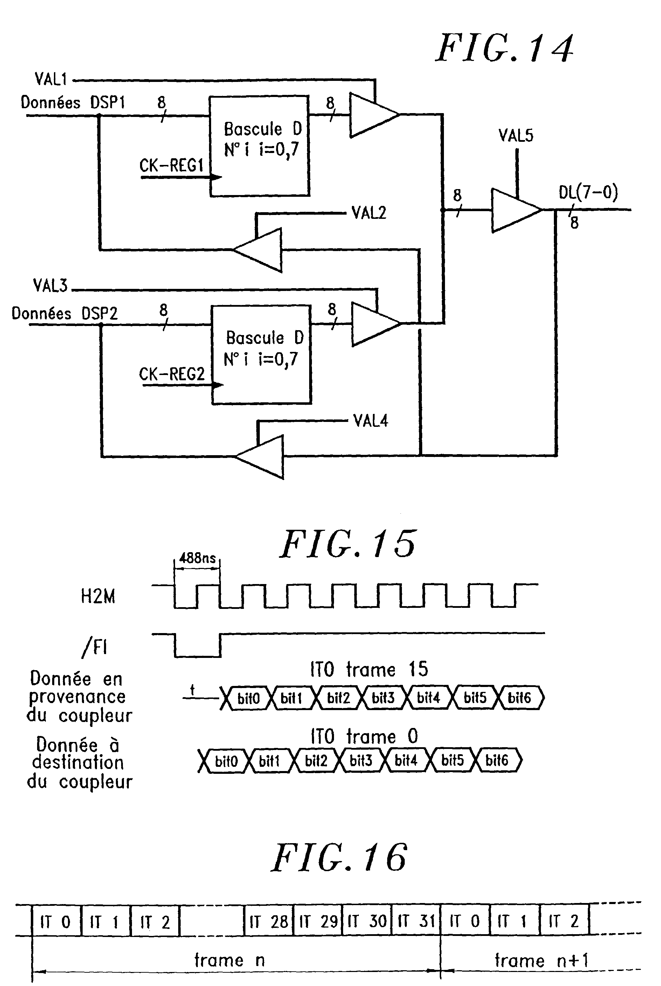

La figure 13 montre le schéma du registre d'adresse et la figure 14 montre le schéma du registre de données.

Le bloc Contrôle/Arbitrage :
- sert à générer des signaux pour la réalisation de la logique (Partie contrôle)
- sert à arbitrer les accès en écriture et en lecture entre les deux DSP 10 et 20.

Les accès en écriture sont tamponnés (dans le registre d'adresse et le registre de données), ce qui permet de libérer le DSP faisant accès, avant que l'écriture dans la MDA 30 n'ait lieu. Dans le cas où les accès sont consécutifs, le premier s'effectue comme décrit précédemment et les autres au rythme d'écriture de la MDA 30.

Lorsqu'un DSP 10, 20 fait un accès en écriture, deux cas peuvent se présenter :
a) soit il n'y a pas de précédente écriture en cours. Dans ce cas, l'adresse et la donnée sont écrites dans un tampon, et le DSP est relâché ;
b) Soit la précédente écriture n'est pas terminée. Dans ce cas, le DSP reste bloqué jusqu'à ce que le tampon devienne libre et l'on se retrouve dans la situation (a).

Lorsque les adresses et les données sont mémorisées dans les tampons, l'accès à la MDA 30 commence par un arbitrage entres les deux DSP 10, 20 pour gérer le flux. En cas de simultanéité, la priorité est donnée à l'un des deux DSP (dans notre cas au DSP10).

Lorsqu'un DSP fait un accès en lecture, l'adresse est mémorisée dans le tampon (registre d'adresse) mais le DSP reste bloqué jusqu'à ce que l'accès soit terminé.

Le début de l'accès est identique à une écriture et commence par un arbitrage entre les deux DSP. En cas de simultanéité, la priorité est donnée l'un des deux DSP (dans notre cas au DSP10).

L'interface boîtier externe/contrôleur est un bus interne type série. C'est un bus temporel sur lequel ni le nombre d'intervalles de temps (IT), ni la fréquence d'horloge ne sont fixés, mais les cartes connectées doivent avoir les mêmes caractéristiques.

Dans le cas d'un accès primaire, le nombre d'intervalles de temps est de 32 intervalles de temps (IT) et la fréquence d'horloge est de 2 048 MHz.

On décrira maintenant plusieurs montages de contrôleurs.

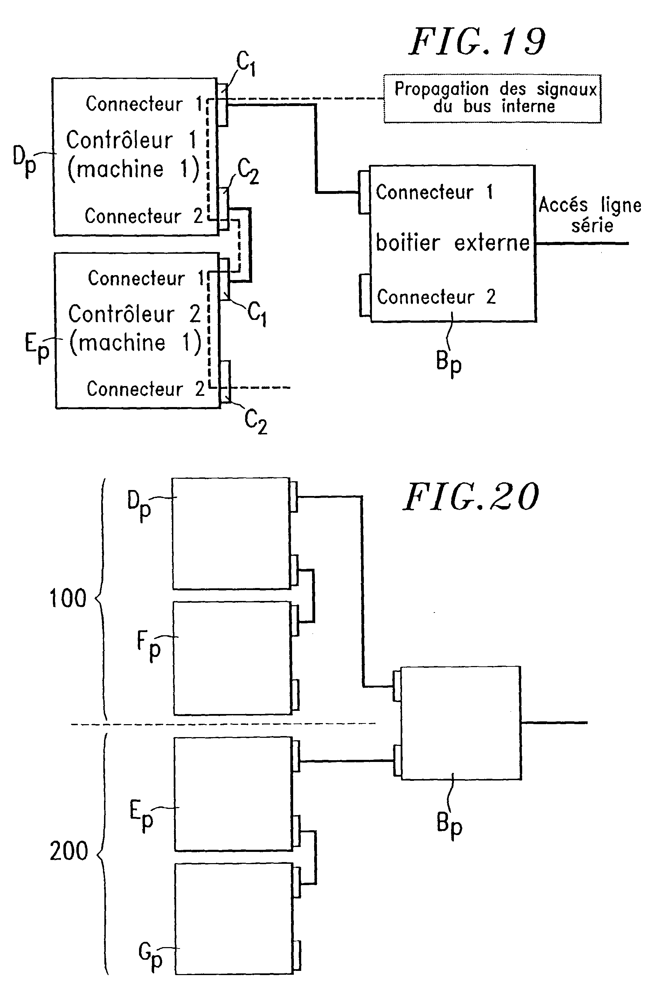

Comme représenté à la figure 18, le boîtier externe Bp est équipé de deux connecteurs identiques C1 et C2 qui véhiculent les mêmes signaux. Toutes les informations sont donc présentes sur les deux connecteurs C1 et C2 du boîtier Bp (fonctionnalités strictement identiques). Deux contrôleurs Dp et Ep sont connectés aux connecteurs C1 et C2 et chacun de ces contrôleurs SS7 prélève les intervalles de temps dont il a la responsabilité de traitement.

La liaison avec le bus interne comporte deux connecteurs ayant une fonctionnalité strictement identique. Le câble de liaison avec le coupleur est point à point. Dans le cas d'une configuration sécurisée, la mise hors tension d'un des contrôleurs Dp ou Ep ne doit pas perturber le fonctionnement du boîtier externe Bp.

Le contrôleur SS7 fournit une horloge à 2,048 MHz synchronisée sur l'horloge réseau ou à défaut sur l'oscillateur local. C'est cette horloge qui sert à synchroniser les différents éléments du boîtier Bp.

Dans tous les modes, le boîtier Bp génère une horloge H2M de fréquence 2,048 MHz ainsi qu'un signal de synchronisation multitrame / FI présent à raison d'un cycle d'horloge toutes les 16 trames. Les données sont synchronisées selon la représentation de la figure 15.

Sur cette figure, on voit que :
- le signal /F1 est généré sur les fronts négatifs de l'horloge H2M ;
- la donnée à destination du contrôleur est émise sur les fronts positifs de l'horloge H2M ;
- la donnée en provenance du contrôleur est émise sur les fronts positifs de l'horloge H2M et doit être mémorisée dans le boîtier sur des fronts positifs de H2M. Le temps t, séparant les fronts positifs du signal M2M des fronts positifs des bits du coupleur, est fonction de la longueur du câble utilisé entre le boîtier et le contrôleur, mais reste inférieur à 300 ns.

A la mise sous tension, le boîtier Bp génère un signal de remise à zéro qui initialise le boîtier et le placera en bouclage local. Si le boîtier n'est pas relié à un contrôleur, les données en entrée sont prises à un, des signaux IT0s contiennent FF ce qui correspond à la réception de commandes invalides et au remplissage de tous les intervalles de temps par un pattern de repos.

Le boîtier reçoit une commande de remise à zéro en provenance d'un contrôleur sur un des signaux qui sont actifs à l'état haut. L'état en l'air (pas de liaison avec un contrôleur) est pris comme un état inactif.

Afin de ne pas prendre en compte un signal parasite, une commande de remise à zéro en provenance du contrôleur doit être mémorisée active deux cycles d'horloge H2M consécutifs pour être prise en compte. Puis elle est synchronisée sur le front arrière du signal /FI, ce qui assure une durée minimale de RESET de 2 millisecondes.

Vu du boîtier Bp, le bus contrôleur est une ligne synchrone full duplex. Cette ligne est du type multiplexage temporel. Une trame comporte 256 bits et est divisée en 32 intervalles de temps. Chaque intervalle de temps est composé d'un octet utilisé pour la transmission d'un canal, comme représenté à la figure 18.

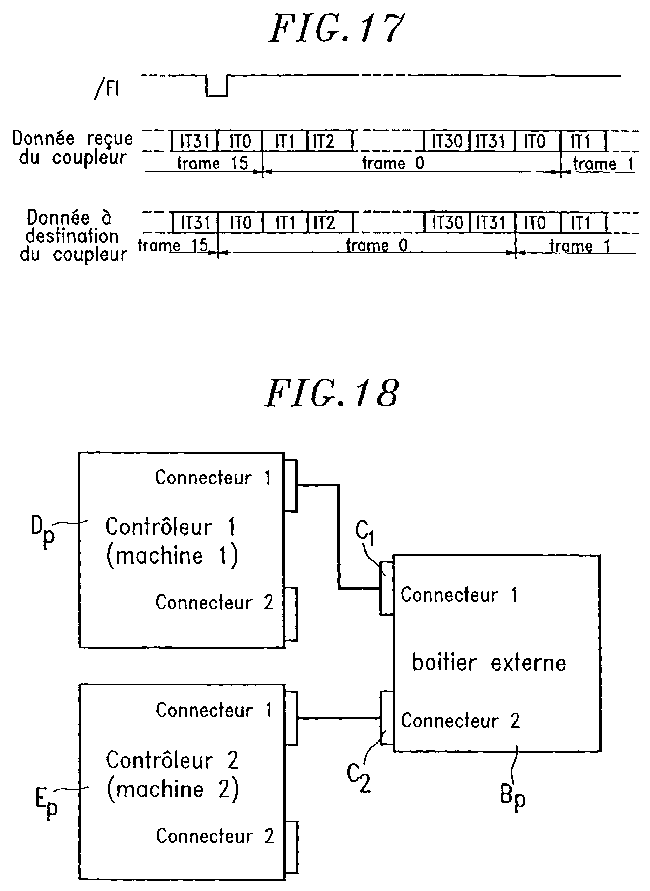

Les trames sont numérotées de 0 à 15, et le signal /FI est émis sur le bit 0 de la trame 0. La structure des données sur le réseau et le bus contrôleur est la même pour les canaux connectés. L'IT0 est utilisé entre le boîtier Bp et le contrôleur considéré Dp, Ep, à l'envoi de commandes et à la remontée de status. Comme représenté à la figure 17, sur FI I'IT0 reçue par le boîtier est celle de la trame 15 alors que I'IT0 émise par le boîtier est celle de la trame 0. Sur le bus contrôleur, le bit de poids faible de chaque octet est émis en premier.

Les commandes sont émises du contrôleur vers le boîtier dans chaque IT0 ne contenant pas les bits d'activité des voies. Dans le cas d'une configuration double comprenant un contrôleur maître et un contrôleur esclave, comme celle qui sera décrite par la suite, seul un des contrôleurs (le contrôleur maître) envoie des commandes. Le contrôleur esclave doit émettre FF dans chaque IT0 car le boîtier effectue un 〈〈 ET〉〉 entre les données des deux contrôleurs. Lorsqu'un contrôleur maître n'a pas de commande à envoyer, il charge les IT0 avec FF qui doit être décodé comme une commande invalide.

Un pattern de repos est émis sur le réseau par le boîtier dans les intervalles de temps non utilisés. La valeur en hexadécimal de ce pattern est 54. Celui-ci ne pouvait pas être généré par le contrôleur du fait des configurations double où chaque contrôleur n'a qu'une vision partielle de la trame.

Chaque contrôleur envoie dans les IT0 des trames 1, 5, 9 et 13 une information indiquant les intervalles de temps qu'elle utilise. Le boîtier reçoit le 〈〈 ET〉〉 des IT0 émis par chaque contrôleur et insère le pattern de repos dans les ITs libres.

L'IT0 de la trame 1 correspond à l'activité des intervalles de temps 0 à 7, I'T0 de la trame 5 à celle des intervalles de temps 8 à 15, I'IT0 de la trame 9 à celle des intervalles de temps 16 à 23 et I'IT0 de la trame 13 à celle des intervalles de temps 24 à 31.

Le mécanisme de connexion permettant une continuité de services est réalisé par le partage d'un boîtier externe Bp par deux contrôleurs Dp et Ep situés chacun dans une machine.

Sur la figure 18, le boîtier Bp présente deux connecteurs C1 et C2 identiques. Les contrôleurs Dp et Ep reçoivent les mêmes informations du boîtier Bp. Les contrôleurs Dp et Ep sont libres de prélever des informations dont ils ont le traitement. Ce mécanisme permet alors :
- la duplication des informations vers les deux contrôleurs Dp et Ep
- la distribution des informations entre les deux contrôleurs

Afin de traiter 31 canaux de signalisation, nous prenons maintenant deux contrôleurs Dp et Fp d'une même machine, montés en série un seul d'entre eux étant relié à un boîtier externe, comme le montre la figure 19. Ainsi, le connecteur C2 du contrôleur Dp sert à la connexion du contrôleur Ep.

En effet, les deux connecteurs C1, C2 de chaque contrôleur Dp, Fp, sont fonctionnellement identiques. De plus, au sein d'un même contrôleur, ils permettent la propagation des différents signaux d'un connecteur vers l'autre (et dans les deux sens).

A titre d'exemple, si le boîtier Bp est connecté au connecteur C1 du contrôleur Dp, le connecteur C1 du contrôleur Ep voit les mêmes signaux que le connecteur C1 du contrôleur Dp. Pour réaliser cette extension, le connecteur C1 du contrôleur Fp doit être connecté au connecteur C2 du contrôleur Ep.

En effet, si, dans ce cas, un seul contrôleur, ici le contrôleur Dp, est connecté au boîtier externe Bp, la capacité de traitement est tout de même de 2N canaux de signalisation car chacun des contrôleurs Dp et Fp traite N canaux parmi les 2N transitant à travers la connexion C1 du contrôleur Dp. Mais cette configuration à elle seule ne permet pas d'assurer la continuité de service au niveau du connecteur (MC).

La capacité de traitement vue depuis la connexion d'échange avec le réseau est doublée par rapport au cas connu où la connexion ne véhicule que les données traitées par un seul contrôleur (elle est ici de 31 canaux).

Si, comme représenté à (a figure 20, deux contrôleurs Dp et Ep, un dans chaque machine 100 et 200, sont connectés au même boîtier externe Bp, et que chacun de ces deux contrôleurs Dp et Ep est relié en série, par son deuxième connecteur, à un deuxième contrôleur respectif Fp, Gp (non connecté à un boîtier externe), de la même machine que le contrôleur considéré, alors la capacité de traitement est de 2N canaux de signalisation sur chaque contrôleur relié directement au boîtier externe Bp, et la continuité de service au niveau du MIC est respectée.

Dans ce cas, l'un des deux contrôleurs en série, ici celui relié directement au boîtier externe, est un contrôleur maître et l'autre est un contrôleur esclave. Le contrôleur maître sélectionne parmi les données reçues du réseau celles qu'il retransmet au contrôleur esclave.

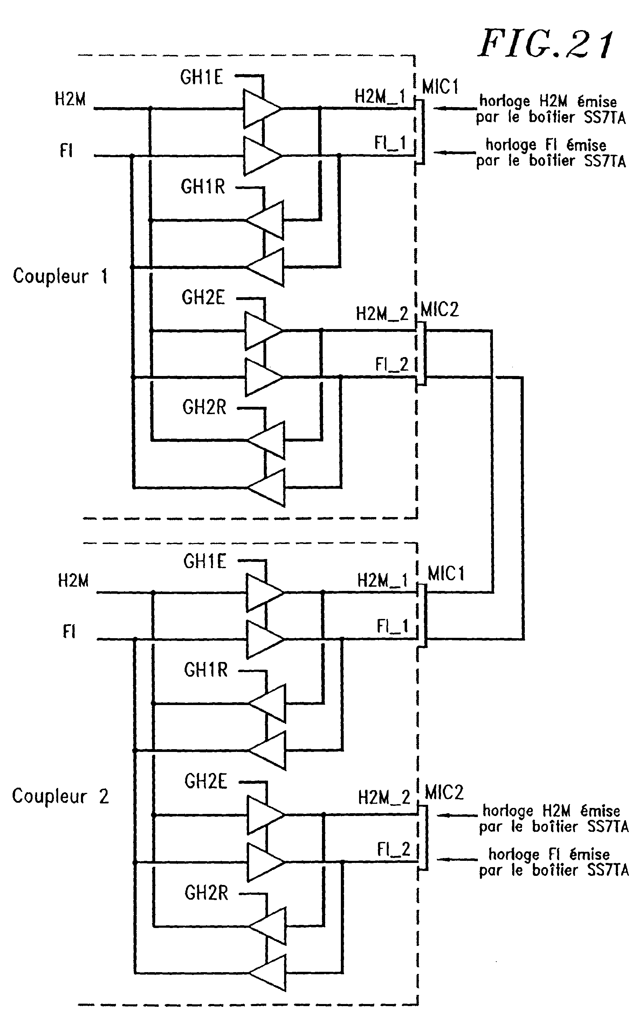

Dans le cas des deux contrôleurs Dp et Fp reliés entre eux avec un boîtier sur le connecteur C1 du premier contrôleur ou le connecteur C2 du deuxième contrôleur, comme représenté à la figure 21, la configuration reconnue par chaque contrôleur positionnera sur chacune des cartes les valeurs de signaux GHiE et GhiR nécessaires pour que les horloges se propagent sur les deux contrôleurs Dp et Fp.

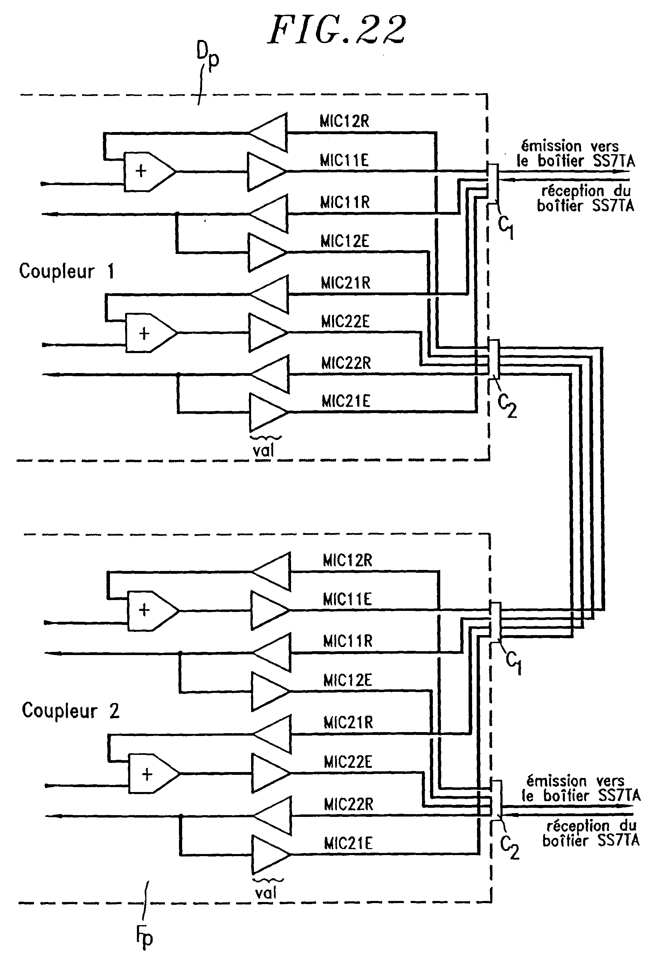

La figure 22 représente le cas des deux contrôleurs Dp et Fp reliés entre eux en série avec un boîtier sur le connecteur C1 de la carte du contrôleur Dp ou le connecteur C2 de la carte du contrôleur Fp.

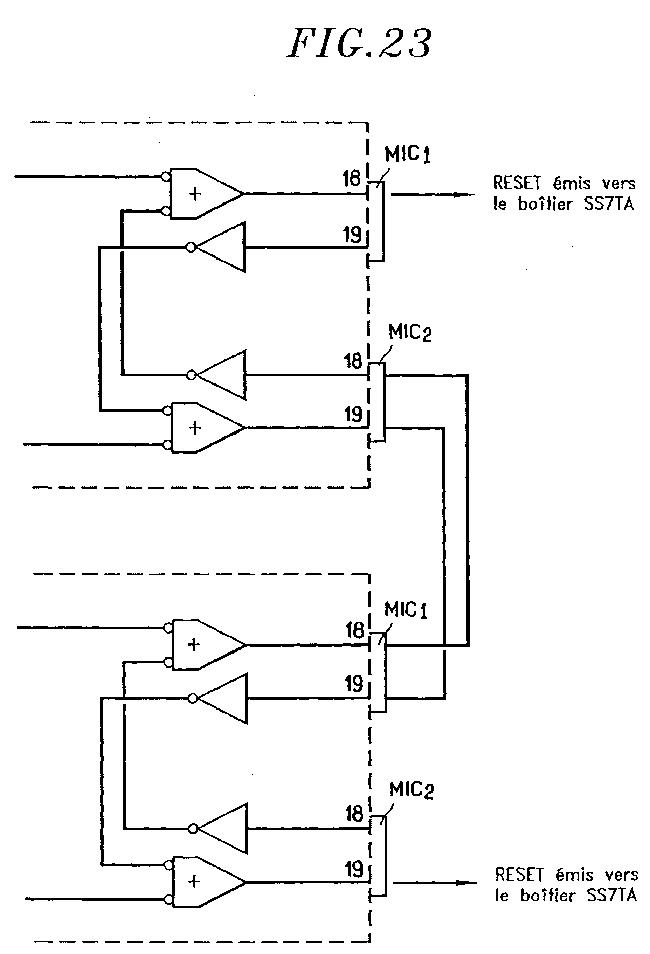

La figure 23 montre, elle, les chemins des signaux de RESET du boîtier Bt à travers les contrôleurs Dp et Fp.

La plate-forme décrite ici est particulièrement adaptée pour être utilisée dans des réseaux sémaphores ou plus généralement des réseaux intelligents (intelligent Network). On offre avec un tel dispositif des serveurs de type SS7 basés sur des contrôleurs SS7 (Signalling System N° 7) remplissant la condition de continiuité de service et optimaux en matière de répartition des liens de signalisation.

## Revendications

1. Serveur de télécommunications comprenant au moins deux machines (100,200) comprenant chacune une série de contrôleurs (D1,...,Dn, E1,...,En, F1,...,Fn, G1,...,Gn) traitant chacun des liaisons d'échange avec le réseau, caractérisé en ce qu'il comprend des moyens pour surveiller le bon fonctionnement des contrôleurs (D1,...,Dn, E1,...,En, F1,...,Fn, G1,...,Gn) et pour commander, lorsqu'un contrôleur (D1,...,Dn, E1,...,En, F1,...,Fn, G1,...,Gn) d'une machine (100,200) est déficient, une prise en charge des liaisons d'échange de ce contrôleur (D1,...,Dn, E1,...,En, F1,...,Fn, G1,...,Gn) par un contrôleur dual (D1,...,Dn, E1,...,En, FI,...,Fn,G1,...,Gn) de l'autre machine (100,200).

2. Serveur selon la revendication 1, caractérisé en ce qu'il constitue un point de signalisation de réseau sémaphore.

3. Serveur selon la revendication 1 ou la revendication 2, caractérisé en ce qu'il comprend au moins un organe (B1 ,... ,Bn) apte à dupliquer les signaux provenant du réseau sur les deux machines (100,200) de façon telle qu'à chaque contrôleur (D1,...,Gn) d'une machine (100,200) correspond un contrôleur dual (D1,... ,Gn) de l'autre machine (100,200) qui reçoit les mêmes signaux.

4. Serveur selon la revendication 3, caractérisé en ce que chacun des contrôleurs (D1,...,Gn) possède des moyens pour sélectionner les signaux qu'il doit traiter parmi ceux qu'il reçoit du réseau.

5. Serveur selon l'une des revendications 1 à 4, caractérisé en ce que chaque contrôleur (D1,... ,Gn) traite des signaux différents de ceux que traite son dual (D1,...,Gn).

6. Serveur selon l'une des revendications 1 à 5, caractérisé en ce qu'en fonctionnement normal d'un contrôleur (D1,...,Gn) et de son dual, ces deux contrôleurs (D1,...,Gn) fonctionnent à au plus la moitié de leur capacité de traitement.

7. Serveur selon l'une quelconque des revendications précédentes, caractérisé en ce qu'en fonctionnement normal de l'ensemble des contrôleurs (D1 ,...,Gn), chaque machine (100,200 ) fonctionne à au plus la moitié de sa capacité de traitement, de sorte qu'en cas de panne d'une machine (100,200), la machine restante (100,200) est apte à réaliser l'ensemble des traitements.

8. Serveur selon la revendication 7, caractérisé en ce que chaque machine (100,200) comporte un module pour surveiller le bon fonctionnement des contrôleurs (D1,...,Gn) des deux machines (100,200).

9. Serveur selon l'une des revendications précédentes, caractérisé en ce que chaque machine (100,200) comporte des moyens de surveillance du bon fonctionnement de l'autre machine (100,200).

10. Serveur selon l'une quelconque des revendications précédentes caractérisé en ce qu'au moins un contrôleur (D1 ,...,Gn) comprend au moins deux processeurs (10,20) de traitement de signal, aptes à réaliser des traitements différents l'un de l'autre et tels qu'aucun résultat d'un traitement d'un de ces deux processeurs (10,20) ne soit nécessaire au traitement réalisé par l'autre processeur (10,20).

11. Serveur selon l'une quelconque des revendications précédentes, en combinaison avec la revendication 10, caractérisé en ce que le contrôleur (D1,... ,Gn) comprenant au moins deux processeurs (10,20) comprend également une mémoire à deux accès (30), un des accès étant prévu pour être relié aux processeurs de traitement (10,20).

12. Serveur selon l'une quelconque des revendications précédentes, caractérisé en ce qu'au moins un contrôleur (D1,... ,Dn, E1,... ,En) présente une connexion d'échange (C1 ,C2) avec le réseau et une connexion (C1 ,C2) avec un second contrôleur (F1,...,Fn, G1,...,Gn) auquel il transmet une partie des signaux reçus du réseau et dont il transmet les signaux de sortie vers le réseau.

13. Serveur selon l'une des revendications précédentes, caractérisé en ce qu'un contrôleur (D1,...,Gn) comporte un processeur de traitement (10,20) et une mémoire tampon (30) disposée entre ce processeur (10,20) et le réseau.

14. Serveur selon l'une quelconque des revendications précédentes, caractérisé en ce qu'en fonctionnement normal des deux machines (100,200), les contrôleurs (D1,...,Gn) de chacune des machines (100,200) fonctionnent et le système d'exploitation d'une des deux machines (100,200) n'est pas opérationnel, l'autre machine (100,200) mettant à jour les données des deux machines (100,200).
